# DEMANDE DE BREVET EUROPEEN

(11) **EP 3 015 854 A1**
(43) Date de publication de la demande: **04.05.2016**
(21) Numéro de dépôt: 15192014.7
(22) Date de dépôt: 29.10.2015
(51) Int. Cl.: G01N 23/227

(54) **PROCÉDÉ D'IDENTIFICATION D'UNE PIÈCE EN PLASTIQUE PAR ANALYSE XPS**

(30) Priorité: 31.10.2014 FR 1460527
(71) Demandeur: COMPAGNIE PLASTIC OMNIUM, 69007 Lyon (FR)
(72) Inventeur: VIOT, Frédéric, 01450 PONCIN (FR); BLOT, Quentin, 69100 VILLEURBANNE (FR)
(74) Mandataire: McDade, Sophie V.G.A.

(57) **Abrégé**

Procédé de caractérisation d'un niveau d'activation de la surface d'une pièce en plastique, ladite surface étant flammée, ledit procédé comprenant les étapes suivantes :
a) une étape de détermination de la quantité de liaisons carbone-oxygène et/ou carbone-azote sur ladite surface flammée par analyse XPS;
b) une étape de détermination de la quantité de liaisons aliphatiques carbone-carbone sur ladite surface flammée par analyse XPS; et
c) une étape de détermination du rapport entre ladite quantité de liaisons carbone-oxygène et/ou carbone-azote et la quantité de liaisons aliphatiques carbone-carbone, ledit rapport représentant le niveau d'activation de ladite surface.

## Description

La présente invention concerne le traitement de surfaces de matériaux plastiques, et notamment de matériaux plastiques à base de polypropylène, par flammage pour augmenter les propriétés d'adhésion de ladite surface. Elle concerne particulièrement un procédé permettant de déterminer des caractéristiques chimiques de ladite surface permettant d'obtenir des propriétés d'adhésion satisfaisantes à des revêtements de type peinture, vernis ou colle.

Pour modifier l'apparence ou protéger la surface de matériaux il est connu d'apposer sur ces surfaces des films de composés organiques divers tels que des vernis et des peintures. Ces composés sont généralement associés à des solvants et appliqués à l'état liquide en une ou plusieurs couches (couches minces de quelques dizaines de micromètres d'épaisseur, µm) et séchés. En séchant, ces revêtements forment un film solide, adhérent et durable. Si le film est transparent ou translucide, c'est un vernis (peinture); s'il est opaque, c'est une peinture. Les vernis et peintures sont usuellement à base de polyuréthane, de résines époxy ou polyesters, de polycarbonates ou de résines acryliques. Les vernis et peintures contiennent au moins un, mais plus souvent plusieurs liants, aussi appelés résines. Ce mélange de résines donne au produit ses caractéristiques fondamentales : durabilité, résistance à l'abrasion humide, adhérence et pénétration dans le support et aspect du film.

Obtenir une bonne adhésion de tels films sur la surface de matériaux, et en particulier sur la surface de matières plastiques, présente de nombreuses difficultés. Des techniques variées de traitement de ces surfaces sont utilisées pour améliorer l'adhésion de ces surfaces.

Par exemple, le brevet des Etats-Unis No. 8,557,343 décrit un composé promoteur d'adhésion comportant notamment une fonction amine, imines ou hydroxyle pour permettre l'apposition de couches de peintures ou vernis additionnelles sur des couches préexistantes.

Les brevets des Etats-Unis No. 5,702,772 et 5,916,674 décrit l'activation de surfaces de matériau tels que du polypropylène par application d'un plasma d'air ainsi que l'utilisation de composés tels que la dextrine pour protéger les surfaces actives ainsi créées.

Le brevet des Etats-Unis No. 8,586,149 enseigne que l'augmentation de la proportion relative d'oxygène et d'azote sur une surface plastique permet une meilleure adhésion. Cette augmentation peut être obtenue par l'application de rayons UV, d'ozone, de décharge de type Corona, par flammage et par plasmas.

La demande de brevet aux Etats-Unis 2010/0151236 décrit l'utilisation d'un matériau et plus particulièrement d'un adhésif, dont une surface est traitée par un dispositif à plasma d'air pour augmenter sa composition en oxygène, notamment de 5 à 30 % en pourcentages atomiques mesurés par spectrométrie de photoélectrons induits par rayons X (XPS). Ce traitement par plasma permet une meilleure adhésion des surfaces ainsi que l'enlèvement d'éventuels contaminants présents sur les surfaces. Une analyse du déplacement du pic XPS correspondant à la variation d'énergie entre couches de valence permet de déterminer la nature des liaisons chimiques à la surface des matériaux. Suivant la nature du matériau traité les proportions de groupements fonctionnels alcools/éthers, carboxyles, cétones, varient dans une large proportion.

Les matériaux servant de base aux revêtements peuvent être des matières plastiques telles que des thermoplastiques. Ces matières thermoplastiques peuvent comprendre l'acrylonitrile butadiène styrène (ABS), les polyamides tels que les polycaprolactames : [NH-(CH₂)₅-CO]ₙ (PA-6), et les polyhexaméthylène adipamides : [NH-(CH₂)₆-NH-CO-(CH₂)₄-CO]ₙ (PA-6,6,), les polycarbonates (PC), les polyéthylènes haute densité (PE-HD), les polyéthylènes basse densité (PE-LD), les poly(téréphtalate d'éthylène) (PET) amorphe ou cristallin, les poly(méthacrylate de méthyle) (PMMA), les polypropylènes (PP), les polystyrènes (PS) « cristal », polychlorure de vinyle (PVC) rigide et leurs mélanges.

Ces matériaux peuvent comprendre une charge minérale ou organique, par exemple du quartz, du mica, du kaolin, du phosphate de calcium, du feldspath, de la stéatite, de la craie, du talc, du noir de carbone de la silice synthétique, du sulfate de baryum, de la ferrite de baryum, de la farine de bois ou d'écorce de fruit, de la pâte de cellulose, des fibres de verre, des microsphères de verre creuses très utilisées, silice synthétique, de l'argile nanométrique, du lin, etc. ainsi que leurs mélanges.

Cette charge peut varier de 1 à 75% en poids suivant la nature de la charge, par exemple de 3 à 30%, plus particulièrement de 1 à 40% en poids par rapport au poids du matériau plastique.

Le polypropylène (PP) est une des matières plastiques les plus utilisées notamment du fait de sa simplicité de fabrication et de moulage et de ces propriétés rhéologiques.

La technique de flammage est la plus couramment utilisée pour améliorer les propriétés d'adhérence avant l'apposition de couches de peintures ou de vernis. Cependant les conditions à remplir pour que le flammage soit performant et aboutisse à une adhésion satisfaisante sont encore largement empiriques.

Malgré les techniques utilisées, les défauts de peintures provenant d'un problème de mauvaise adhésion sont très fréquents dans l'industrie et peuvent être présents dans plus de 10% des surfaces peintes.

Il existe donc un besoin d'identifier si une pièce flammée présente les caractéristiques permettant une adhésion satisfaisante des revêtements tels que des vernis ou des peintures.

Il existe donc une nécessité de caractériser le niveau d'activation d'une surface flammée qui est une caractéristique prépondérante de l'adhésion. Par niveau d'activation on entend le niveau d'oxydation ou de réduction de la surface flammée.

Selon un premier mode de réalisation selon l'invention, il est décrit un procédé de caractérisation d'un niveau d'activation de la surface d'une pièce en plastique, ladite surface étant flammée, ledit procédé comprenant les étapes suivantes :
a) une étape de détermination de la quantité de liaisons carbone-oxygène et/ou carbone azote sur ladite surface flammée par analyse XPS;
b) une étape de détermination de la quantité de liaisons aliphatiques carbone-carbone et/ou carbone-azote sur ladite surface flammée par analyse XPS; et
c) une étape de détermination du rapport entre ladite quantité de liaisons carbone-oxygène et la quantité de liaisons aliphatiques carbone-carbone ledit rapport représentant le niveau d'activation de ladite surface.

Il a été déterminé qu'un tel niveau d'activation permet de caractériser l'aptitude de la pièce à réaliser une bonne adhésion avec des revêtements tels que des primaires, des peintures des vernis et des colles.

L'analyse XPS permet de mesurer la présence de liaisons aliphatiques carbone-carbone (c'est-à-dire où le carbone aliphatique n'est lié qu'avec un carbone ou un hydrogène) et de déterminer l'abondance relative de ces liaisons par rapport à d'autres types de liaisons, par exemple des liaisons carbones-oxygène et/ou carbone-azote.

Selon un mode de réalisation de l'invention ce procédé peut permettre notamment l'identification d'une pièce en plastique, notamment à base de polypropylène, comprenant une surface flammée susceptible de permettre une adhérence acceptable avec un revêtement. Un tel procédé comprend la mise en oeuvre du procédé décrit ci-avant auquel on ajoute une étape de comparaison du rapport représentant le niveau d'activation de ladite surface avec une valeur standard prédéterminée. Selon un mode de réalisation particulier, si le rapport est supérieur à la valeur préétablie ladite surface flammée de ladite pièce présente des caractéristiques d'activation acceptable.

Le niveau d'activation peut-être le niveau d'oxydation ou de réduction de la surface flammée. De préférence ce niveau peut être déterminé par le rapport de la quantité des liaisons carbone-carbone et des liaisons carbone-oxygène (qui est un niveau d'oxydation). Il est également possible d'utiliser un niveau de réduction comme par exemple le rapport des liaisons carbone-carbone et des liaisons carbone azote.

Selon un aspect particulièrement préféré de l'invention, ladite valeur prédéterminée est d'au moins 0,35, de préférence d'au moins 0,40. Cette valeur peut cependant être choisie comme étant d'au moins 0,20, 0,25, 0,30, 0,31, 0,32, 0,32, 0,33, 0,34, 0,36, 0,37, 0,39 ou 0,41, ±0.05.

Un tel procédé permet de grandement faciliter la détermination de conditions de flammage satisfaisantes en évitant, ou en réduisant, le nombre de tests devant être effectués sur des pièces revêtues des différentes couches de revêtements (peintures, vernis etc.). En effet de tels tests sont longs et couteux à mettre en place. De plus un tel procédé permet également d'identifier et d'écarter de la chaine de production les pièces dont le flammage n'a pas permis d'obtenir une oxydation satisfaisante et qui ne permettront probablement pas d'obtenir le niveau requis d'adhésion des revêtements à la surface flammée.

Selon un aspect particulier de l'invention la pièce en matière plastique est à base de polypropylène mais elle peut-être une pièce en matière plastique et/ou thermoplastique telles que celles déjà décrites précédemment. De préférence elle comprend un mélange de polyéthylène et de polypropylène et peut également comprendre divers additifs tels qu'un matériau élastomère, par exemple un copolymère de type EPR (Ethylene Propylene Rubber ou caoutchouc éthylène propylène).

Ainsi l'expression « à base de polypropylène » désigne un matériau comprenant au moins 50% en poids de polypropylène. De préférence la matière plastique à base de polypropylène comprend au moins 60% de polypropylène, plus particulièrement au moins 70% et préférentiellement au moins 80% en poids total du matériau en matière plastique.

Avantageusement dans le procédé selon l'invention le plastique comprend, ou consiste en, un mélange de polypropylène, de polyéthylène, de talc et de caoutchouc éthylène propylène. La quantité de polypropylène du plastique est avantageusement d'au moins 50% en poids par rapport au poids total de ladite pièce. La quantité de caoutchouc éthylène propylène est avantageusement de 5 à 15%, de préférence 10%, en poids par rapport au poids total du plastique.

De préférence le matériau plastique de la pièce comprend une charge minérale ou organique telle que décrite précédemment. De préférence cette charge, en poids, est comprise de 5 à 40 %, de préférence de 5 à 30%, par exemple de 10% et de préférence 12% par rapport au poids total du plastique.

De préférence la charge comprend une charge minérale et en particulier du talc.

De préférence la pièce en matière plastique est faite d'un polymère comprenant, ou étant constitué de, un copolymère P/E à base de propylène polyéthylène comprenant 12% en poids de talc et 10% en poids d'un matériau élastomère de type EPR, en poids par rapport au poids total du polymère.

La pièce en matière plastique est de préférence une pièce moulée, extrudée ou compressée.

La pièce en matière plastique est de préférence une pièce de carrosserie, notamment une pièce de carrosserie d'un véhicule automobile.

La pièce en matière plastique comprend une surface qui a été flammée, c'est-à-dire qu'elle a été soumise à l'application d'une flamme. Cette étape de flammage est connue dans le domaine technique de l'invention et peut être effectuée à l'aide d'un brûleur au gaz naturel dans des conditions légèrement oxydantes ou non.

Le procédé permet d'identifier si une telle surface présente des caractéristiques d'adhérence acceptables, c'est-à-dire prédéterminées par l'utilisateur. Il a en effet été déterminé que l'adhérence entre une surface en matière plastique à base de polypropylène et un ou plusieurs revêtements tels que des vernis, peintures, etc., est lié au rapport entre les liaisons aliphatiques C-C/C-H et les liaisons carbone-oxygène et ou carbone azote présentent à la surface du matériau. En effet ce rapport permet d'établir un degré d'activation de la surface flammée. En règle générale plus la surface flammée est activé plus l'adhérence avec un revêtement, ou film, est forte.

Ces revêtements, ou films, sont en particulier des peintures et vernis usuels tels que décrits précédemment. Ces revêtements peuvent également être des colles. Ces revêtements sont en particuliers les différents revêtements d'apprêts utilisés dans le domaine des peintures de l'industrie automobile, et particulièrement des peintures de carrosserie, qui s'intercalent entre les couches pour en améliorer les caractéristiques d'adhérence, anticorrosion, de résistance au choc etc...

En particulier il s'agit des revêtements apposées directement sur la surface flammées (primaires) et qui sont à base (c'est-à-dire contenant plus de 50% en poids) de polyuréthane, de résines époxy ou polyesters, de polycarbonates, de résines acryliques ou d'un mélange de ces composants.

La détermination du rapport entre la quantité de liaisons carbone-oxygène ou carbone-azote par rapport à la quantité de liaisons aliphatique carbone-carbone présentes sur ladite surface flammée est effectuée par analyse XPS. La profondeur de l'analyse est généralement inférieure à 10nm et est de préférence d'environ 3nm. En règle générale l'analyse est faite selon les mêmes paramètres que ceux utilisés pour obtenir la valeur standard prédéterminée.

Le procédé selon l'invention est particulièrement adapté à la réalisation de pièces automobiles, et notamment de pièces peintes, comme par exemple des pièces de carrosserie automobile.

Un objet de l'invention est également une pièce automobile, et en particulier une pièce de carrosserie automobile obtenu par le procédé décrit.

L'invention sera mieux comprise à la lecture des exemples de réalisations, qui sont fournies à titre d'information et ne présentent aucun caractère limitatif.

### Exemples

14 plaques planes en matière plastique moulées de 200x600 mm ont été utilisées pour exemplifier le procédé selon l'invention. Le matériau utilisé est un copolymère P/E à base de propylène polyéthylène comprenant 12% en masse de talc et 10% en masse d'un matériau élastomère : l'EPR. Une surface de ces plaques a été positionnée à 80 mm d'une source de chaleur. La source de chaleur utilisée est un brûleur de type Ipros au gaz naturel dans des conditions légèrement oxydantes, c'est-à-dire avec 20 ± 2 % en volume d'air supplémentaire que pour une combustion dans des conditions stoechiométriques. Deux vitesses de déplacement du brûleur ont été utilisées : 0,8 m/s (CONDITION I) et 1m/s (CONDITION 2). Le temps de flammage pour chaque unité de la surface flammée est identique.

3 échantillons de dimensions 5 cm X 5 cm sont prélevés par massicots sur les plaques environs 10mn après le flammage, en faisant attention de ne pas polluer la surface. Les échantillons sont ensuite emballés dans du papier aluminium pour protéger ceux-ci. Les échantillons sont stockés dans un dessiccateur sous vide moyen (avec trompe à eau).

Les échantillons sont identifiés de manière suivante :
Plaques sans traitement de surface (4x) : échantillons 0A, 0B, 0C, 0D.
Plaque traitée (flammage 0,8 m/s ou CONDITION I) (8x) : échantillons 1A à 1 H.
Plaque traitée (flammage 1 m/s où CONDITION II) (2x) : échantillons 2A et 2B.

Ces échantillons sont ensuite analysés par spectrométrie de photoélectrons induits par rayons X (ou analyse XPS). Un appareil d'analyse PHI Quantera SXM commercialisé par la société Physical Electronics, Inc. a été utilisé pour effectuer cette analyse. Les spécifications analytiques sont les suivantes :
- profondeur d'analyse : inférieure à 10 nm (environ 3 nm);
- profondeur analysable: quelques 1/10ième de µm maximum;
- diamètre aire analysée : 200 µm;
- tous les éléments chimiques sont détectables, sauf H et He;
- seuil de détection : 0,1 % à 0,5 % atomique;
- analyse quantitative :
   - précision 2 à 5 % selon la teneur;
   - justesse 20 %.

Les spectres obtenus ont tous été recalés d'après la composante aliphatique C-C/C-H du carbone, centrée à 285 eV. En surface, le pic C 1s présente plusieurs composantes correspondant :
- aux liaisons C-C/C-H pour des composés aliphatiques, à 285 eV,
- aux liaisons C-O et/ou C-N, à 286,4 eV,
- aux liaisons O-C-O et/ou C=O, vers 287,6 eV,
- aux liaisons O-C=O, vers 289 eV.

Les résultats des analyses sont indiqués dans le tableau I suivant :

**Tableau I**

| Plaques | C-C/C-H | C-O/C-N | C=O/O-C-O | O-C=O | (C/O)/(C-C)* |
|---|---|---|---|---|---|
| 0A | 95 (93,8) | 5 (4,9) | | | 0,05 |
| 0B | 96 (94,0) | 4 (3,9) | | | 0,04 |
| 1A | 68 (51,8) | 17 (13,0) | 8 (6,1) | 7 (5,3) | 0,4 ± 0,05 |
| 1B | 69 (53,2) | 17 (13,1) | 7 (5,4) | 7 (5,4) | 0,45 ± 0,05 |
| 1C | 70 (54,5) | 17 (13,2) | 7 (5,4) | 6 (4,7) | 0,43 ± 0,04 |
| 1D | 70 (53,8) | 17 (13,1) | 7 (5,4) | 6 (4,6) | 0,43 ± 0,04 |
| 1E | 69 (53,8) | 17 (13,2) | 7 (5,5) | 7 (5,5) | 0,45 ± 0,05 |
| 1F | 71 (55,6) | 16 (12,5) | 7 (5,5) | 6 (4,7) | 0,41 ± 0,04 |
| 1G | 70 (54,7) | 17 (13,3) | 7 (5,5) | 6 (4,7) | 0,43 ± 0,04 |
| 1H | 69 (52,9) | 17 (13,0) | 7 (5,4) | 7 (5,4) | 0,45 ± 0,05 |
| 0C | 96 (94,5) | 4 (3,9) | | | 0,04 |
| 0D | 96 (94,6) | 4 (3,9) | | | 0,04 |
| 2A | 74 (59,3) | 16 (12,8) | 6 (4,8) | 5 (4,0) | 0,35 ± 0,03 |
| 2B | 74 (59,6) | 16 (12,9) | 5 (4,0) | 5 (4,0) | 0,35 ± 0,03 |

| | | | | | |
|---|---|---|---|---|---|
| *Le ratio (C/O)/(C-C) est une moyenne sur 3 résultats (échantillons/plaques), (2 mesures par échantillons). | | | | | |

### Résultats

Sur les échantillons de la plaque 0, sans traitement de surface (flammage) le ratio moyen (C/O)/(C-C) est de 0,04 ou de 0.05.
Sur les échantillons des plaques 1 (CONDITION 1) : ratio moyen C/O/C-C = 0,40 à 0,45.
Sur les échantillons des plaques 2 (CONDITION 2) : ratio moyen C/O/C-C = 0,35

Après le traitement de surface, et une fois les échantillons prélevés, on applique sur les plaques 0, et les plaques A et B traitées, des couches de différents matériaux de peintures qui vont constituer un feuil. La plaque de polypropylène qui supporte le feuil est appelée subjectile.

La première couche appliquée, appelée primaire, est un composant de type conducteur et polyuréthane dissous dans un solvant organique. La seconde couche appliquée est constituée d'une couche de peinture grise métallisée de type polyuréthane dissous dans un solvant organique, chargé de pigments et de paillettes métalliques. La couche finale appliquée est un vernis couramment utilisé dans l'industrie automobile de type polyuréthane dissous dans un solvant organique.

Ces différents composés sont appliqués par pistolet à peinture basse pression avec mise en mouvement haut/bas afin d'assurer une bonne reproductibilité des quantités de chaque couche de matériau déposée. Dans cet exemple l'épaisseur des couches sont de 5µm pour le primaire, 25 µm pour la peinture et 30 µm pour le vernis. Le temps de séchage entre chaque couche est le même : 1 mn.

Les plaques recouvertes de ces couches sont ensuite introduites dans un four à circulation d'air chaud à 80°c pendant 20 mn afin de faire réticuler la peinture.

Les tests d'adhérence suivants ont été effectués pour une plaque de chacune des conditions 0, 1 et 2.

Pour l'évaluation de la tenue aux agressions extérieures, le feuil de peinture est incisé jusqu'au subjectile pour former un quadrillage et l'adhérence des carrés du réseau est appréciée. Les essais sont effectués dans une pièce à une température située entre 21 °C et 25°C. L'essai doit être réalisé en trois endroits différents de l'éprouvette. Six incisions parallèles sont pratiquées, suivies de six incisions chevauchant les incisions initiales à 90°. L'espacement des incisions est de 2 mm.

L'éprouvette est ensuite légèrement brossée. Du ruban adhésif présentant une adhésivité comprise entre 600 g/cm et 750 g/cm (selon la norme NF EN 1939) est ensuite utilisé. Le centre du ruban adhésif est placé sur le quadrillage, parallèlement à l'une des directions d'incision, et on le fait adhérer sur le quadrillage et autour sur une longueur d'au moins 20 mm, en le lissant avec l'arête arrondie d'une pièce en bois. Le temps d'adhésion est au moins d'une minute. Dans les cinq minutes qui suivent l'application du ruban adhésif, celui-ci est retiré en prenant l'extrémité libre et en arrachant rapidement, en 0,5 à 1 seconde, sous un angle aussi proche que possible de 60°. Pour que le résultat soit satisfaisant aucun décollement du feuil ou de l'une quelconque des couches de revêtement le constituant ne doit être observé.

Ce test est réalisé sur une plaque à l'état initiale (test adhérence initiale) ainsi qu'après immersion dans l'eau (test de résistance à l'immersion) et chauffage (test de tenue à la chaleur).

### 1°) Test adhérence du feuil après immersion dans l'eau

Les plaques sont immergées dans de l'eau déminéralisée à 40°C pendant 10 jours. Les plaques testées sont sorties de l'eau, essuyées puis laissées au repos pendant 1 heure.

### 2°) Test d'adhérence du feuil après chauffage

Les plaques sont exposées à une température de 85 °C pendant 7 jours. Les plaques testées sont alors laissées à refroidir jusqu'à retour à la température ambiante.

Un test de résistance au nettoyage haute pression a également été réalisé. Lors de ce test des incisions en forme de croix sont effectuées sur les plaques. Ces incisions sont au nombre de 2 sur chaque plaque. Elles sont en forme de croix, pénètrent jusqu'au subjectile et sont inscrites chacune dans un carré de 10 cm de côté. Ces plaques sont ensuite soumises pendant 30 secondes à un jet d'eau à 85°C émis sous une pression de 65 bars par une buse à jet plat d'un nettoyeur haute pression située à 10 cm de la pièce et dirigée sur les incisions. Pour que le résultat soit satisfaisant le décollement de chaque croix ne doit pas dépasser 1 cm² et le décollement du feuil ou de l'une quelconque des couches de revêtement le constituant doit être inférieur à 2 cm² sur l'ensemble de la plaque. Le décollement est mesuré par observation visuelle puis par réglet.

Les résultats de ces tests sont présentés dans le tableau II ci-dessous :

**Tableau II**

| Conditions | Tests de tenue du feuil | | | |
|---|---|---|---|---|
| | Test d'adhérence initiale | Test de résistance à l'immersion dans l'eau | Résistance au nettoyage haute pression | Test de Tenue à la chaleur |
| Cond. 0 | Aucun | Non conforme, | Non conforme, | conforme |
| | décollement | décollement peinture et cloquage | décollement est supérieur à 2 cm² | |
| Cond. 1 | Aucun décollement | Conforme, quelques petites cloques, pas de décollement | Conforme, aucun décollement | conforme |
| Cond. 2 | Aucun décollement | Conforme, pas de cloques ni de décollement | Conforme, quelques décollements dont la surface est inférieure à 1 cm² | conforme |

### Conclusion : choix de la valeur standard

Un flammage effectué à une vitesse d'1 m/s ou de 0,8m/s permet d'obtenir des subjectiles satisfaisants dans ces deux conditions. Ainsi pour un matériau polymère tel que décrit, un flammage permettant d'obtenir un rapport (C/O)/(C-C) supérieur ou égal à 0,35 ± 0.03 permet d'obtenir une adhérence du feuil au subjectile conforme aux principales exigences des constructeurs automobile.

L'invention n'est pas limitée aux modes de réalisation présentés et d'autres modes de réalisation apparaîtront clairement à l'homme du métier. Il est notamment possible de varier le paramètre étudié. Dans l'exemple de mise en oeuvre étudié le paramètre a été la vitesse de flammage, mais cette condition peut être la hauteur du flammage, c'est-à-dire la distance entre le brûleur et la partie flammée, les propriétés oxydo réductrices, la concentration d'oxydant dans le combustible utilisé lors du flammage ou la nature organique/aqueuse du solvant utilisé dans les composants du feuil.

## Revendications

1. Procédé de caractérisation d'un niveau d'activation de la surface d'une pièce automobile en plastique à base de polypropylène, ladite surface étant flammée, ledit procédé comprenant les étapes suivantes :
a) une étape de détermination de la quantité de liaisons carbone-oxygène et carbone-azote sur ladite surface flammée par analyse XPS;
b) une étape de détermination de la quantité de liaisons aliphatiques carbone-carbone sur ladite surface flammée par analyse XPS; et
c) une étape de détermination du rapport entre ladite quantité de liaisons carbone-oxygène et carbone-azote et la quantité de liaisons aliphatiques carbone-carbone, ledit rapport représentant le niveau d'activation de ladite surface.

2. Procédé selon la revendication 1, **caractérisé en ce que** l'on compare ledit niveau d'activation obtenu avec une valeur standard prédéterminée.

3. Procédé selon la revendication 1 ou la revendication 2, **caractérisé en ce que** ledit niveau d'activation est un niveau d'oxydation.

4. Procédé selon l'une quelconque des revendications 1 à 3, **caractérisé en ce que** ledit plastique est un matériau à base de polypropylène.

5. Procédé selon la revendication 4, **caractérisé en ce que** ledit plastique comprend, ou consiste en, un mélange de polypropylène, de polyéthylène, de talc et de caoutchouc éthylène propylène.

6. Procédé selon la revendication 4 ou la revendication 5, **caractérisé en ce que** la quantité de polypropylène dans ledit plastique est d'au moins 50% en poids par rapport au poids total dudit plastique.

7. Procédé selon la revendication 5 ou la revendication 6, **caractérisé en ce que** la quantité de talc est de 5 à 30%, de préférence 12%, en poids par rapport au poids total du plastique.

8. Procédé selon l'une quelconque des revendications 5 à 7, **caractérisé en ce que** la quantité de caoutchouc éthylène propylène est de 5 à 15%, de préférence 10% en poids par rapport au poids total du plastique.

9. Procédé selon l'une quelconque des revendications 1 à 8, **caractérisé en ce que** ladite valeur prédéterminée est d'au moins 0,35, de préférence d'au moins 0,40.

10. Procédé selon l'une quelconque des revendications 1 à 9, **caractérisé en ce que** ladite pièce automobile est une pièce de carrosserie.
